(19)

**Europäisches Patentamt**
**European Patent Office**
**Office européen des brevets**

(11) **EP 4 606 827 A1**

(12) **EUROPEAN PATENT APPLICATION**

(43) Date of publication:
27.08.2025 Bulletin 2025/35

(21) Application number: 25151705.8

(22) Date of filing: 14.01.2025

(51) International Patent Classification (IPC):
*C08F 212/08* (2006.01)  *H01M 4/62* (2006.01)

(52) Cooperative Patent Classification (CPC):
(C-Sets available)
H01M 4/622; C08F 212/08   (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 07.02.2024 CN 202410176239

(71) Applicant: **AESC Japan Ltd.**
**Kanagawa, 2520012 (JP)**

(72) Inventors:
• ZHAO, Yuhai
  **Pudong New Area Shanghai, 201315 (CN)**
• SUN, Huayu
  **Pudong New Area Shanghai, 201315 (CN)**

(74) Representative: **Becker, Eberhard**
  **Becker Kurig & Partner**
  **Patentanwälte mbB**
  **Bavariastraße 7**
  **80336 München (DE)**

(54) **LATEX AND PREPARATION METHOD THEREOF, ELECTROCHEMICAL DEVICE**

(57)   The disclosure discloses a latex, a preparation method thereof, and an electrochemical device. The latex is a dispersion including a binder and a solvent. The binder includes particles having a core-shell structure, in which a core of the core-shell structure is a cavity, and a shell of the core-shell structure is a binding polymer. The solvent includes water. The preparation method of the latex includes the following. A mixture of an oil phase and a water phase is sheared, a polymerization reaction is performed at a pressure of 0.1-1 MPa, and the pressure is released to obtain the latex. The oil phase includes alkane and raw materials of the binding polymer. The boiling point of alkane is less than 100°C. The raw materials of the binding polymer include at least monomers. The water phase includes water and an emulsifier.

FIG. 2

**(Cont. next page)**

EP 4 606 827 A1

(52) Cooperative Patent Classification (CPC): (Cont.)

C-Sets
**C08F 212/08, C08F 2/26;**
**C08F 212/08, C08F 220/20, C08F 220/14,**
**C08F 212/36**

**Description**

**BACKGROUND**

Technical Field

The disclosure relates to a latex, a preparation method thereof, and an electrochemical device.

Description of Related Art

Improving mass energy density is a key challenge in the development of lithium/sodium-based batteries. Reducing the mass ratio of the binder in the electrode piece of the lithium/sodium-based battery is a simple and effective method. However, this method usually means a reduction in the bonding area, which leads to a decrease in the peeling force and cohesion of the electrode piece of the lithium/sodium-based battery, so that the integrity of the conductive network is likely to be damaged, which is ultimately reflected in the increase in the impedance of the lithium/sodium-based battery and the decrease of the cycle life of the battery.

In order to approach a lower limit of the amount used of the binder, researchers are committed to developing various types of high-performance binders. Typical methods include, for example, introducing polar functional groups, increasing molecular weight, and optimizing the ratio of each monomer. However, existing strategies to improve the bonding level are limited and cannot significantly reduce the amount used of the binder.

**SUMMARY**

In order to solve the problem in the related art that the mass ratio of the binder in the electrode piece of the battery cannot be reduced while taking into account the cycle stability of the battery, a latex, a preparation method thereof, and an electrochemical device are provided. When the latex provided by the disclosure is used as a binding material in the electrode piece of the electrochemical device, a high level of binding force can be achieved at a low amount used of the latex, thereby both the energy density and the cycle stability of the electrochemical device can be achieved.

In the first aspect, the disclosure provides a latex, the latex is a dispersion including a binder and a solvent. The binder includes particles having a core-shell structure, in which a core of the core-shell structure is a cavity, a shell of the core-shell structure is a binding polymer, and the solvent includes water.

In the second aspect, the disclosure provides a preparation method for the latex as described above, which includes steps as follows.

A mixture of an oil phase and a water phase is sheared, a polymerized reaction is performed at a pressure of 0.1-lMPa, and the pressure is released to obtain the latex.

The oil phase includes alkane and raw materials of the binding polymer, the boiling point of the alkane is less than 100°C, and the raw materials of the binding polymer include at least monomers.

The water phase includes water and an emulsifier.

In the third aspect, the disclosure provides an electrochemical device, in which a preparation process of an electrode piece of the device adopts the latex as mentioned above.

Based on common sense in the art, the above preferred conditions may be combined arbitrarily to obtain preferred examples of the disclosure.

The reagents and raw materials used in the disclosure are all commercially available.

The positive effect of the disclosure is as follows. The latex provided by the disclosure can reach the level of bonding force at a lower mass amount of the latex while the existing binder uses a higher mass amount of the latex. Also, when the latex is used as a binding material for the preparation of the electrode pieces of electrochemical devices (especially, a lithium-based/ sodium-based battery), while reducing the mass ratio of the binder, the use of the latex according to the disclosure enables the electrochemical devices to have a significant energy density and ensures that the battery has a good cycle stability.

**BRIEF DESCRIPTION OF THE DRAWINGS**

Figure 1 is an SEM image of a latex in Example 1.
Figure 2 is a TEM image of the latex in Example 1.

**DESCRIPTION OF THE EMBODIMENTS**

The disclosure is further described below by examples, but the disclosure is not limited to the scope of the described examples. In the following examples, experimental methods not indicating specific conditions should be performed according to common methods and conditions, or selected according to product specifications.

Latex

In a latex provided by the first aspect of the disclosure, the latex is a dispersion including a binder and a solvent; the binder includes particles having a core-shell structure, in which a core of the core-shell structure is a cavity, and a shell of the core-shell structure is a binding polymer; and the solvent includes water.

In some optional embodiments, the latex is an aqueous dispersion.

In the disclosure, the true density of the binder may be $0.3\text{-}0.95\,\text{g/cm}^3$, preferably $0.3\text{-}0.9\,\text{g/cm}^3$, for example, may be $0.32\,\text{g/cm}^3$, $0.36\,\text{g/cm}^3$, $0.44\,\text{g/cm}^3$, $0.74\,\text{g/cm}^3$, or $0.91\,\text{g/cm}^3$. The true density of the binding polymer is generally $1.0\text{-}1.5\,\text{g/cm}^3$. It may be seen that the true density of the binder according to the disclosure may reflect that most of the binder is particles having the core-shell structure with the core being the cavity instead of solid particles. For the true density of the binder, the mass and volume of the binder may be obtained by using common testing methods in the art, and calculation may be performed according to a calculation formula. The calculation formula for the true density of the binder is: true density = $m_{binder}/V_{binder}$, in which $m_{binder}$ is the mass of the binder, and $V_{binder}$ is the volume of the binder.

In the disclosure, the porosity of the binder may be not less than 50%. The porosity refers to the ratio of the volume of the cavities in the binder to the total volume of the binder. In an ideal situation, all particles in the binder are particles having the core-shell structure. In this case, the calculation of single-core/single-shell is taken as an example:

$$P = V_{cavity}/V_{particle}$$

In the above formula, P refers to the porosity of a single particle (the volume ratio of the cavity), $V_{cavity}$ refers to the volume of the cavity in the particle, and $V_{particle}$ refers to the total volume of the particle.

In the disclosure, the porosity of the binder may be obtained by obtaining $V_{cavity}$ and $V_{particle}$ from an image taken by TEM and substituting the values into the formula.

In some optional embodiments, the particle size of the binder is 0.1-10 $\mu$m, such as 0.3 $\mu$m.

In some optional embodiments, the thickness of the shell of the core-shell structure is 0.01-1 $\mu$m, optionally 15-50 nm, such as 20 nm, 30 nm, 40 nm, or 45 nm.

In some optional embodiments, a molar percentage of the particles having the core-shell structure to all particles in the binder is more than 99%.

In some optional embodiments, a solid content of the latex is ≤60%, such as 9.2%, 9.9%, or 16.9%, and the percentage of the solid content is the mass percentage of the binder in the latex.

Preparation Method of Latex

In a preparation method of a latex provided by the second aspect of the disclosure, the following steps are included. A mixture of an oil phase and a water phase is sheared, a polymerization reaction is performed at a pressure of 0.1-1MPa, and the pressure is released to obtain the latex. The oil phase includes alkane and raw materials of the binding polymer; the boiling point of the alkane is less than 100°C; the raw materials of the binding polymer include at least monomers; and the water phase includes water and an emulsifier.

When the pressure of the polymerization reaction is less than 0.1 MPa, the alkane is likely to escape, which is not conducive to the escape of the alkane to form a hollow core-shell structure during the subsequent pressure release process.

When the boiling point of the alkane is more than 100°C, the alkane is not likely to escape during the pressure release process, which is not conducive to obtaining the hollow core-shell structure through the escape of the alkane.

In a preferred embodiment, the boiling point of the alkane is less than 80°C.

In a specific embodiment, the boiling point of the alkane is 27.5°C.

In some optional embodiments, the mass ratio of the oil phase to the water phase is 1: (1.5-9), optionally 1: (3.3-6.3), for example, 1:1.7, 1:2.9, 1: 3.4, 1:4, 1:8.3, or 1:8.5. The mass ratio of the oil phase to the water phase mainly affects the stability of the latex. When the mass ratio of the oil phase to the water phase is in an appropriate range, a good stability of the latex obtained can be ensured.

In some optional embodiments, the mass ratio of the alkane to the monomers is 1: (0.4-6), such as 2:1, 1.5:1, 1:2, or 1:5.

In the disclosure, the mass ratio of the emulsifier to water may be (0.01-5): (150-1000), for example, 0.01:1000.

In the disclosure, the step of shearing may be performed using strong shear liquid-liquid dispersion equipment. The strong shear liquid-liquid dispersion equipment preferably includes one of a high-speed shearer, a high-pressure homogenizer, a cell crusher, and a hypergravity field generating device, such as a high-speed shearer or an ultrasonic cell crusher.

In some optional embodiments, the shearing speed of the high-speed shearer is 2000-5000 rpm.

In some optional embodiments, the power of the ultrasonic cell crusher is 200-500W.

In the disclosure, the shearing time may be 5-15 minutes.

In the disclosure, the shearing temperature may be less than the ambient temperature. The ambient temperature refers to the temperature of the environment when shearing is performed, and is preferably 25°C. The shearing temperature in the disclosure is less than the ambient temperature, in order to prevent a large amount of vaporization of the alkane of a low boiling point caused by a high temperature.

In the disclosure, the temperature of the polymerization reaction may be 50-85°C, for example, 75°C.

In the disclosure, the polymerization reaction time may be 6-12 hours, for example, 10 h.

In the disclosure, the alkane may include one or more of $C_5$-$C_{10}$ short chain alkanes.

In some embodiments, the alkane is isopentane.

In some optional embodiments, the monomers include one or more of acrylate, methacrylate, hydroxyethyl acrylate, styrene, acrylic acid, butadiene, methacrylic acid, acrylonitrile, methacrylonitrile, acrylamide, and derivatives thereof.

In the disclosure, the raw materials of the binding polymer may further include an initiator. The initiator may be an azo initiator and/or a peroxide initiator with a water solubility less than or equal to 0.5 g/kg of water at 25°C; the azo initiator preferably includes azobisisobutyronitrile and/or azobisisoheptanitrile; and the peroxide initiator preferably includes one or more of benzoyl peroxide, ammonium persulfate, and potassium persulfate.

In some embodiments, the initiator is azobisisobutyronitrile.

In the disclosure, the raw materials of the binding polymer may further include a cross-linking agent. The cross-linking agent may be a common optional cross-linking agent in the art, generally including one or more of divinylbenzene, ethylene glycol dimethacrylate, allyl methacrylic acid, ethylene glycol diacrylate, butylene glycol diacrylate, butylene glycol dimethacrylate, neopentyl glycol dimethacrylate, adipate dimethacrylate, triethylene glycol dimethacrylate, tetraethylene glycol dimethacrylate, trimethylolpropane, and pentaerythritol tetramethacrylate.

In some embodiments, the cross-linking agent is divinylbenzene.

In some optional embodiments, the emulsifier includes one or more of sodium lauryl sulfate, cetyltrimethylammonium bromide, nonyl-phenol polyoxyethylene ether, OP surfactant, Span surfactant, Tween surfactant, and sodium dodecylbenzene sulfonate.

In some embodiments, the emulsifier is sodium lauryl sulfate.

In some optional embodiments, the water phase further includes one or more of a dispersant, a metal salt, and a polymerization inhibitor.

The dispersant may improve the stability of large-sized latex particles. The dispersant may be a common dispersant in the art, generally selected from one or more of polyvinyl alcohol, magnesium hydroxide, calcium carbonate, calcium phosphate, silica sol, polyvinylpyrrolidone, styrene-maleic anhydride copolymer, and carboxymethyl cellulose, such as polyvinyl alcohol.

The metal salt may reduce the diffusion of highly water-soluble monomers in the water phase, capture free radicals in the water phase, and improve the synthesis efficiency of the core-shell structure. The metal salt may be a common metal salt in the art, generally an ionic compound, such as sodium chloride.

The polymerization inhibitor may include one or more of nitrite and potassium dichromate.

In some optional embodiments, the oil phase includes the initiator, the alkane, the monomers, and the cross-linking agent, in which the mass ratio of the initiator, the alkane, the monomers, and the cross-linking agent may be (0.5-3): (20-200): 100: (2-10).

In some optional embodiments, the water phase includes the dispersant, the emulsifier, the metal salt, the polymerization inhibitor, and water, in which the mass ratio of the dispersant, the emulsifier, the metal salt, the polymerization inhibitor, and water may be (1-50): (0.01-5): 1: (0.01-2): (150-1000).

Electrochemical Device

In an electrochemical device provided by the third aspect of the disclosure, a preparation process of an electrode piece of the device adopts the latex as described above.

In the disclosure, the electrode piece is preferably a negative electrode piece.

In the disclosure, the electrochemical device may be a sodium-ion battery or a lithium-ion battery, preferably a lithium-ion battery.

In some optional embodiments, the lithium-ion battery includes the negative electrode piece, a positive electrode piece, a separator, and an electrolyte.

Negative Electrode Piece

In some optional embodiments, the negative electrode piece may be prepared using common methods in the art. For example, the following method may be used. After a negative electrode active material, a conductive agent, the latex, and a thickener are mixed according to a certain mass ratio, a solvent is added and mixed evenly to obtain a negative electrode slurry. Then, the negative electrode slurry is evenly coated on a negative electrode current collector. Afterward, processes such as drying, rolling, and cutting are performed, and the negative electrode piece is obtained.

In the operation, the mass ratio of the negative electrode active material, the conductive agent, the latex, and the thickener may be (96.4-98.1):0.5: (0.9-2.6):0.5, in which the mass ratio is calculated based on the mass of the solid phase in the latex.

The negative electrode active material may be a negative electrode active material commonly used in the art to prepare negative electrode pieces, and optionally may be one or more of artificial graphite, natural graphite, soft carbon, hard carbon, mesocarbon microspheres, silicon oxide, and silicon carbon.

The addition of the thickener may increase the system viscosity of each component in the negative electrode slurry, and may be a thickener commonly used in the art to prepare negative electrode pieces, such as sodium carboxymethy lcellulose (CMC).

The conductive agent is not particularly limited as long as the agent has conductivity and does not cause chemical changes in the battery. For example, specifically: graphite, such as natural graphite or artificial graphite; carbon-based materials, such as carbon black (Super P), acetylene black, Ketjen black, channel black, furnace black, lamp black, thermal black, or carbon fiber; metal powder or metal fibers such as copper, nickel, aluminum, or silver; conductive whiskers, such as zinc oxide whiskers or potassium titanate whiskers; conductive metal oxides, such as titanium dioxide; or conductive polymers, such as polyphenylene derivatives.

For the negative electrode current collector, the negative electrode current collector may be a current collector commonly used in the art for negative electrodes, and may be an ordinary current collector or a composite current collector. Materials that do not cause chemical changes and have conductivity may be used without limitation as the negative electrode current collector. For example, copper, stainless steel, aluminum, nickel, titanium, roasted carbon, or aluminum-cadmium alloy may be used, alternatively, copper, stainless steel material, or aluminum-cadmium alloy surface-treated with carbon, nickel, titanium, or silver. In addition, in order to enhance the adhesion of the negative electrode active material, micro-embossing may be formed on the surface of the negative current collector. The negative electrode current collector may be used in various forms, such as film, sheet, foil, mesh, or porous body.

In some optional embodiments, the thickness of the negative electrode current collector may be 5-10 $\mu$m.

In some specific embodiments, the negative electrode current collector is a copper foil with a thickness of 10 $\mu$m.

Positive Electrode Piece

In some optional embodiments, the positive electrode piece may be prepared using common methods in the art. For example, the following method may be used. After a positive electrode active material, the conductive agent, and the binder are mixed according to a certain mass ratio, a solvent is added and mixed evenly to obtain a positive electrode slurry. Then, the positive electrode slurry is evenly coated on a positive electrode current collector. Afterward, processes such as drying, cold pressing, and slitting are performed, and the positive electrode piece is obtained.

In the operation, the positive electrode active material is a positive electrode active material commonly used in the art to prepare positive electrode pieces, such as a ternary positive electrode material, for example, $LiFePO_4$ or $LiNi_{0.5}Co_{0.2}Mn_{0.3}O_2$.

The conductive agent is not particularly limited as long as the agent has conductivity and does not cause chemical changes in the battery. For example, specifically: graphite, such as natural graphite or artificial graphite; carbon-based materials, such as carbon black (Super P), acetylene black, Ketjen black, channel black, furnace black, lamp black, thermal black, or carbon fiber; metal powder or metal fibers such as copper, nickel, aluminum, or silver; conductive whiskers, such as zinc oxide whiskers or potassium titanate whiskers; conductive metal oxides, such as titanium dioxide; or conductive polymers, such as polyphenylene derivatives.

The binder plays a role in improving the adhesion between the positive electrode active materials and the adhesion between the positive electrode active material and the positive electrode current collector, the type of the binder is not particularly limited, and specific examples of the binder may include polyvinylidene fluoride (PVDF), polyvinylidene fluoride hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, ethylene propylene diene monomer (EPDM), sulfonation EPDM, styrene butadiene rubber (SBR), fluorine rubber, or various copolymers thereof, and a mixture of any one or two or more of the above mentioned may be used.

For the positive electrode current collector, materials that do not cause chemical changes and have high conductivity may be used without limitation. For example, stainless steel, aluminum, nickel, titanium, or roasted carbon may usually be used, alternatively, aluminum or stainless steel materials surface-treated with, for example, carbon, nickel, titanium, or silver. In order to enhance the adhesion of the positive electrode active material, micro-embossing may be formed on the surface of the positive electrode current collector. The positive electrode current collector may be used in various forms, such as film, sheet, foil, mesh, or porous body.

In some optional embodiments, the thickness of the positive electrode current collector may be 8-16 $\mu$m.

In some specific embodiments, the positive electrode current collector is an aluminum foil with a thickness of 16 $\mu$m.

Separator

In some optional embodiments, the separator is selected from polypropylene film or polyethylene film.

The air permeability of the separator may be 180-380 s/100mL.

The porosity of the separator may be 30%-50%.

The thickness of the separator may be 12 $\mu$m.

In a specific embodiment, the separator is a polypropylene film; the thickness of the separator is 12 $\mu$m; the air permeability of the separator is 230s/100mL; and the porosity of the separator is 40%.

Electrolyte

In some embodiments, the electrolyte may be an electrolyte commonly used in lithium-ion batteries in the art, which generally includes a non-aqueous solvent, lithium salts, and an additive.

The non-aqueous solvent may be a common non-aqueous solvent in the art, preferably an ester solvent, and more preferably a carbonate solvent. The carbonate solvent may be selected from one or more of ethylene carbonate, dimethyl carbonate (DMC), diethyl carbonate (DEC), dipropyl carbonate (DPC), methylpropyl carbonate (MPC), ethylpropyl carbonate (EPC), methyl ethyl carbonate (MEC), ethyl methyl carbonate (EMC), ethylene carbonate (EC), propylene carbonate (PC), and butylene carbonate (BC).

The additive may be selected from one or more of vinylene carbonate (VC), fluoroethylene carbonate (FEC), vinyl ethylene carbonate (VEC), vinyl sulfate (DTD), vinylene sulfate, 1,3-propane sultone (PS), propenyl sultone, and 1,4-butane sultone.

The lithium salts may be common lithium salts in the art, such as $LiPF_6$.

In the disclosure, the preparation method of the lithium-ion battery may be a common preparation method in the art, which may be as follows. The positive electrode piece, the negative electrode piece, and the separator are winded to obtain a battery core and packaged in a packaging shell, and the electrolyte is injected therein. Alternatively, the negative electrode piece, the separator, the positive electrode piece, and the separator may be stacked sequentially in this order to obtain the battery core and packaged in a packaging shell, and the electrolyte is injected therein.

Based on common sense in the art, the above preferred conditions may be combined arbitrarily to obtain various preferred examples of the disclosure.

Example 1

Preparation of Latex

Step (1) 0.5 parts by mass of azobisisobutyronitrile, 200 parts by mass of isopentane, and 100 parts by mass of monomers (which includes 50 parts by mass of styrene, 40 parts by mass of hydroxyethyl acrylate, and 10 parts by mass of methyl methacrylate), and 2 parts by mass of divinylbenzene are mixed to form an oil phase.

Step (2) 10 parts by mass of polyvinyl alcohol, 0.01 parts by mass of sodium lauryl sulfate, 0.01 parts by mass of sodium nitrite, and 1 part by mass of sodium chloride are dispersed or dissolved into 1000 parts by mass of deionized water to form a water phase.

Step (3) The oil phase and the water phase are mixed, and shearing is performed on the mixture formed by using a high-speed shearer at 5000 rpm for 10 minutes to obtain an oil/water dispersion system, in which the mass ratio of the oil phase to the water phase is 1:3.3.

Step (4) The oil/water dispersion system is transferred to an autoclave, the pressure in the autoclave is controlled to be 0.6 MPa, the temperature is raised to 70°C, polymerization is performed for 8 hours, and the pressure is released to obtain the latex.

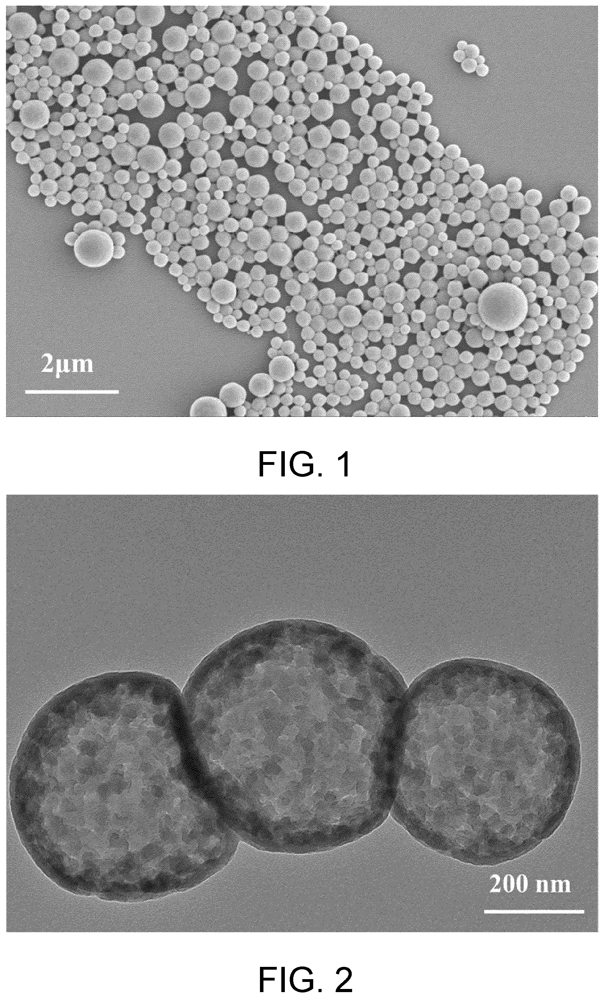

A scanning electron microscope (SU-8010, Hitachi, Japan) is used to test the latex obtained in Example 1, and an SEM image is obtained (as shown in Figure 1). A transmission electron microscope (HT-7700, Hitachi, Japan) is used to test the latex obtained in Example 1, and a TEM image is obtained (as shown in Figure 2). As may be seen from Figure 2, the latex obtained in Example 1 includes particles having a core-shell structure, in which the core of the core-shell structure is a cavity. In the SEM and TEM tests, the sample preparation method is as follows. 0.01mL of the latex is taken, diluted 5 to 10 times, and then dried to obtain the particles of the latex.

Example 2

Preparation of Latex

Based on Example 1, keeping other conditions unchanged, only the amount of isopentane in step (1) is changed to 150 parts by mass.

Example 3

Preparation of Latex

Based on Example 1, keeping other conditions unchanged, only the amount of divinylbenzene in step (1) is changed to 10 parts by mass.

Example 4

Preparation of Latex

Based on Example 3, keeping other conditions unchanged, only the amount of isopentane in step (1) is changed to 50 parts by mass.

Example 5

Preparation of Latex

Based on Example 1, keeping other conditions unchanged, only the amount of isopentane in step (1) is changed to 20 parts by mass.

Example 6

Preparation of Latex

Based on Example 1, keeping other conditions unchanged, only the amount of isopentane in step (1) is changed to 16.7 parts by mass.

Example 7

Preparation of Latex

Based on Example 1, keeping other conditions unchanged, only the amount of isopentane in step (1) is changed to 250 parts by mass.

Example 8

Preparation of Latex

Based on Example 1, keeping other conditions unchanged, only the amount of sodium lauryl sulfate in step (2) is changed to 5 parts by mass.

Example 9

Preparation of Latex

Based on Example 1, keeping other conditions unchanged, only the amount of sodium lauryl sulfate in step (2) is changed to 6 parts by mass.

Example 10

Preparation of Latex

Based on Example 1, keeping other conditions unchanged, only the amount of polyvinyl alcohol in step (2) is changed to 5 parts by mass, the amount of sodium lauryl sulfate is changed to 0.005 parts by mass, the amount of sodium nitrite is changed to 0.005 parts by mass, the amount of sodium chloride is changed to 0.5 parts by mass, and the amount of deionized water is changed to 500 parts by mass.

Latexes having different properties in Examples 1 to 10 are prepared by adjusting the specific parameters of the process.

Comparative Example 1

The latex is Japanese ZEON BM-451B latex.

Comparative Example 2

The latex is Japanese ZEON BM-451B latex.

The true density, porosity, particle size of the binder, thickness of the shell of the core-shell structure, and relation of the amount of each component in the latexes of Examples 1 to 10 and parameters such as the true density, porosity, particle size of the binder in the latex of Comparative Examples 1 to 2 are listed in Table 1.

The true density of the binder may be calculated by the test method as follows. A certain volume $V_{latex}$ of the latex is taken, whose mass is $m_{latex}$, and then dried so that the solvent therein vaporizes. The mass of the solvent is collected as $m_{solvent}$, whose volume is $V_{solvent}$. The true density of the binder may be calculated by the following formula: true density = $m_{binder}/V_{binder} = (m_{latex} - m_{solvent})/(V_{latex} - V_{solvent})$. The specific operation of the testing method of the true density is a common technical skill in the art, so details will not be repeated here.

The value of the porosity of the binder may be calculated by the following calculation method. In the specific calculation method, the calculation of single core/single shell is taken as an example:

$$P = V_{alkane} = \rho_{binding\ polymer}/(\rho_{binding\ polymer} + \rho_{alkane} \times m_{binding\ polymer}/m_{alkane})$$

In the formula, P refers to the porosity of a single particle (the volume ratio of the cavity), $V_{alkane}$ refers to the volume ratio of the alkane, $\rho_{binding\ polymer}$ refers to the density of the binding polymer, $m_{binding\ polymer}$ refers to the mass of the monomers, and $m_{alkane}$ refers to the mass of the alkane. The formula is based on the following assumptions: (1) The core-shell structure is complete and symmetrical; (2) The alkane/binding polymer phase separation is complete.

Table 1

| Sample | True density of binder/ (g/cm³) | Porosity of binder | Particle size of binder | Thickness of shell of core-shell structure | Solid content of latex | Mass ratio of oil phase to water phase | Mass ratio of alkane to monomers | Mass ratio of emulsifier to water |
|---|---|---|---|---|---|---|---|---|
| Example 1 | 0.36 | 67% | 0.3μm | 20nm | 9.2% | 1:3.3 | 2:1 | 0.01:1000 |
| Example 2 | 0.44 | 60% | 0.3μm | 30nm | 9.2% | 1:4 | 1.5:1 | 0.01:1000 |
| Example 3 | 0.36 | 67% | 0.3μm | 20nm | 9.9% | 1:3.3 | 2:1 | 0.01:1000 |
| Example 4 | 0.74 | 33% | 0.3μm | 40nm | 9.9% | 1:6.3 | 1:2 | 0.01:1000 |
| Example 5 | 0.91 | 17% | 0.3μm | 50nm | 9.2% | 1:8.3 | 1:5 | 0.01:1000 |
| Example 6 | 0.95 | 14% | 0.3μm | 45nm | 9.2% | 1:8.5 | 1:6 | 0.01:1000 |

(continued)

| Sample | True density of binder/ (g/cm³) | Porosity of binder | Particle size of binder | Thickness of shell of core-shell structure | Solid content of latex | Mass ratio of oil phase to water phase | Mass ratio of alkane to monomers | Mass ratio of emulsifier to water |
|---|---|---|---|---|---|---|---|---|
| Example 7 | 0.32 | 71% | 0.3μm | 15nm | 9.2% | 1:2.9 | 2.5:1 | 0.01:1000 |
| Example 8 | 0.36 | 67% | 0.15μm | 20nm | 9.2% | 1:3.4 | 2:1 | 5:1000 |
| Example 9 | 0.36 | 67% | 0.1μm | 20nm | 9.2% | 1:3.4 | 2:1 | 6:1000 |
| Example 10 | 0.36 | 67% | 0.3μm | 50nm | 16.9% | 1:1.7 | 2:1 | 0.01:1000 |
| Comparative Example 1 | 1.1 | 0% | 0.3μm | / | 40% | / | / | / |
| Comparative Example 2 | 1.1 | 0% | 0.3μm | / | 40% | / | / | / |
| Note: "/" in Table 1 means that the condition parameter is not involved in the specific experiment. | | | | | | | | |

Effect Example 1

(1) Preparation of Negative Electrode Piece

The preparation method of the negative electrode piece includes steps as follows.

In the negative electrode pieces of Examples 1 to 10 and Comparative Examples 1 to 2, according to the amount in Table 2, the negative electrode active material graphite, conductive carbon black, latex, and thickener sodium carboxymethyl cellulose (CMC) are mixed, added with solvent deionized water, and stirred to mix evenly to obtain the negative electrode slurry. The negative electrode slurry is evenly coated on a current collector of a 10 μm copper foil. After processes such as drying, rolling, and cutting, the negative electrode pieces of Examples 1 to 10 and Comparative Examples 1 to 2 are obtained, in which the rolling pressure is 5T.

(2) Peeling Force Test of Electrode Piece

The electrode pieces to be tested are cut into long strips (length × width = 10cm × 3cm), and bonded to long quartz glass plates taped with VHB tape (the area of the long quartz glass plates is slightly larger than the electrode piece). A special small round roller is used to repeatedly roll the electrode piece three times to ensure that the electrode piece and the VHB are fully bonded. A universal stretching machine is used, the standard method of testing peeling force at 180° is selected to test the peeling force of the electrode piece, and each sample is tested three times to take the average value.

The results of the tests are listed in Table 2.

Effect Example 2

Preparation of Lithium-Ion Battery

(1) Preparation of positive electrode piece: the positive active material lithium iron phosphate, conductive carbon black (Super P), and binder polyvinylidene fluoride (PVDF) in a mass ratio of 97:1:2 (100 parts by mass in total) are mixed evenly, added with N-methylpyrrolidone (NMP), and stirred to disperse evenly to obtain a lithium-ion battery positive electrode slurry. The positive electrode slurry is evenly coated on an aluminum foil of 16 μm thickness. After drying, rolling, and cutting, the positive electrode piece is obtained.

The areal density of the positive electrode piece is 19.88mg/cm², the size of the positive electrode piece is cut to 45mm × 58mm, and the mass of the positive electrode active material is: the areal density of the positive electrode piece × area × mass ratio of the positive electrode active material, that is, 19.88 mg/cm² × 45 mm × 58 mm × 97%. The positive electrode piece in each embodiment and comparative example is the same.

(2) Preparation of negative electrode piece: the preparation of the negative electrode piece is the same as (1) in Effect Example 1. The size of the negative electrode piece is cut to 50mm × 60mm, and the mass of the negative electrode active material is: the areal density of the negative electrode piece $\times$ area $\times$ mass ratio of the negative electrode active material.

When the latex of Comparative Example is used to prepare the negative electrode piece, the areal density of the negative electrode piece is 9.0 mg/cm$^2$. The mass of the negative electrode active material used in Examples 1 to 10 and Comparative Example 2 is the same as Comparative Example 1.

When the mass of the negative electrode active material is greater than the mass of the positive active material, an initial discharge capacity is determined by the amount of the positive active material. When the amount of the positive active material is the same, the initial discharge capacity should also be the same. Any difference is only regarded as a measurement error.

(3) Preparation of electrolyte: ethylene carbonate (EC) and propylene carbonate (PC) in a volume ratio of 1:1 are mixed evenly. Appropriate amount of LiPF$_6$ is dissolved in the mixture to prepare the electrolyte with a concentration of 1 mol/L.

(4) Preparation of separator: the separator is a polypropylene film. The thickness of the separator is 12 $\mu$m, the air permeability of the separator is 230s/100mL, and the porosity of the separator is 40%.

(5) Preparation of lithium-ion battery: all of the prepared components including the positive electrode pieces, the separator, the negative electrode pieces prepared from the latex of Examples 1 to 10 and Comparative Example 1, and the electrolyte are assembled sequentially in order (including 8 layers of positive electrode piece and 9 layers of negative electrode piece), so that the positive electrode pieces, the separator, the negative electrode pieces prepared from the latex of Examples 1 to 10 and Comparative Example 1, and the separator are alternately combined to obtain a soft pack battery with a capacity of 1 Ah via battery formation.

The negative electrode pieces and lithium-ion batteries prepared from the latex of Examples 1 to 10 and Comparative Example 1 are tested as follows.

Test method for capacity retention rate (%) of 1000 cycle of lithium-ion battery:

In a constant temperature environment of 25°C, charging is performed with a constant current and constant voltage at a rate of 1C to 4.25V (the constant voltage cut-off current is 0.05C), and then discharging is performed with a constant current at a rate of 0.33C to 2.8V. This is one cycle. Repeat this cycle 1000 times, and the ratio of the discharge capacity of the 1000th cycle to the 1st cycle (the initial discharge capacity) is calculated as the capacity retention rate. The test results are listed in Table 2.

The results of the tests are listed in Table 2.

Table 2 Peeling force of electrode pieces prepared from latexes of Examples 1 to 10 and Comparative Examples 1 to 2 and electrochemical performance data of lithium-ion batteries prepared therefrom

| Sample | Electrode piece peeling force/(N/m) | Initial discharge capacity/mAh | 1000th cycle discharge capacity/mAh | Capacity retention rate (1000 cycles)/(%) | Mass ratio of negative electrode active material, conductive agent, latex, and thickener |
|---|---|---|---|---|---|
| Example 1 | 16 | 1000 | 902 | 90.2 | 98.0: 0.5: 1.0:0.5 |
| Example 2 | 15 | 998 | 900 | 90.2 | 97.8: 0.5: 1.2: 0.5 |
| Example 3 | 15 | 1001 | 908 | 90.7 | 98.0: 0.5: 1.0: 0.5 |
| Example 4 | 17 | 1000 | 905 | 90.5 | 97.0: 0.5: 2.0: 0.5 |
| Example 5 | 15 | 1000 | 905 | 90.5 | 96.5: 0.5: 2.5: 0.5 |
| Example 6 | 16 | 1002 | 907 | 90.5 | 96.4: 0.5: 2.6: 0.5 |
| Example 7 | 13 | 996 | 903 | 90.7 | 98.1: 0.5: 0.9: 0.5 |
| Example 8 | 17 | 998 | 908 | 91.0 | 98.0: 0.5: 1.0: 0.5 |
| Example 9 | 14 | 1000 | 902 | 90.2 | 98.0: 0.5: 1.0: 0.5 |
| Example 10 | 14 | 1000 | 902 | 90.2 | 96.5 : 0.5 : 2.5 : 0.5 |
| Comparative Example 1 | 15 | 1001 | 905 | 90.4 | 96.0: 0.5: 3.0: 0.5 |
| Comparative Example 2 | Material fall off | / | / | / | 96.4: 0.5: 2.6: 0.5 |
| Note: "/" in Table 2 means that the condition parameter is not involved in the specific experiment. | | | | | |

The true density of the binder in the latex prepared in Examples 1 to 10 of the disclosure does not exceed 1 g/cm$^3$, and the molar percentage of the particles having the core-shell structure to all particles in the binder is more than 99%, which may basically be regarded as 100%. For Comparative Examples 1 to 2, Japanese ZEON BM-451B latex is used, the true density is 1.1 g/cm$^3$, and the latex has solid particles.

When the latex of Examples 1 to 10 of the disclosure is used to prepare the negative electrode piece, the mass amount used of the latex is 0.9%-2.6%. The mass amount used of the latex used in Comparative Example 1 is 3%. The peeling force of the electrode piece prepared from the latex of Examples 1 to 10 of the disclosure is equivalent to the peeling force of the electrode piece prepared from Comparative Example 1. From the comparison between Comparative Example 1 and Comparative Example 2, it may be seen that the existing Japanese ZEON BM-451B latex may be used normally when the ratio of the latex is at least 3%. When the ratio of the latex is less than 3% (for example, the ratio of the latex in Comparative Example 2 is 2.6%), the material falls off and cannot be used in the preparation of the negative electrode piece.

When the latex of Examples 1 to 10 is used to prepare the negative electrode piece and the mass amount used of the latex is 0.9%-2.6%, the capacity retention rate (1000 cycles) of the lithium-ion battery obtained can reach 90% or above, or even 91%. However, when the mass amount used of the latex used in Comparative Example 1 is 3%, the capacity retention rate (1000 cycles) of the lithium-ion battery obtained is 90.4%. It may be seen that the amount of latex used in the examples of the disclosure is less, and the capacity retention rate of the lithium-ion battery is the same. In addition, when the latex of Examples 1 to 10 is used to prepare the negative electrode piece, the initial discharge capacity and the 1000th cycle discharge capacity of the lithium-ion battery obtained are equivalent to Comparative Example 1.

Compared with other examples, the porosity of the binder in the latex obtained in Example 5 and Example 6 is lower, so when used in preparing the negative electrode piece, the mass amount required of the latex is higher.

It may be seen from the above that the latex of the disclosure can reach the level of bonding force at a lower mass amount of the latex while the existing binder uses a higher mass amount of the latex. Also, when the latex is used as a binding material for the preparation of the electrode pieces of the lithium-ion battery, while reducing the mass ratio of the binder, the use of the latex according to the disclosure enables the lithium-ion battery to have a significant energy density and ensures that the battery has a good cycle stability, thereby the cycle life does not decay during use.

## Claims

1. A latex, wherein the latex is a dispersion comprising a binder and a solvent, the binder comprises particles having a core-shell structure, a core of the core-shell structure is a cavity, a shell of the core-shell structure is a binding polymer, and the solvent comprises water.

2. The latex according to claim 1, wherein the latex meets one or more of conditions (a) to (c) as follows:

   (a) a true density of the binder is 0.3-0.95 g/cm$^3$;
   (b) a porosity of the binder is not less than 50%; and
   (c) a particle size of the binder is 0.1-10 $\mu$m.

3. The latex according to claim 1, wherein the latex meets one or two of conditions (a) to (c) as follows:

   (a) a thickness of the shell of the core-shell structure is 0.01-1 $\mu$m;
   (b) a form of the core-shell structure comprises one or more of single core, multi-core, single shell, and multi-shell; and
   (c) a molar percentage of the particles having the core-shell structure to all particles in the binder is more than 99%.

4. The latex according to claim 1, wherein a solid content of the latex is ≤60%, wherein a percentage of the solid content is a mass percentage of the binder in the latex.

5. A preparation method of the latex according to any one of claims 1 to 4, comprising:

   performing a shearing process a mixture of an oil phase and a water phase, performing a polymerization reaction at a pressure of 0.1-IMPa, and releasing the pressure to obtain the latex, wherein
   the oil phase comprises alkane and raw materials of the binding polymer, a boiling point of the alkane is less than 100°C, and the raw materials of the binding polymer comprise at least monomers, and
   the water phase comprises water and an emulsifier.

**6.** The preparation method of the latex according to claim 5, wherein the method meets one or more of conditions (a) to (h) as follows:

(a) the boiling point of the alkane is less than 80°C;
(b) a mass ratio of the oil phase to the water phase is 1: (1.5-9);
(c) a mass ratio of the alkane to the monomers is 1: (0.4-6);
(d) a mass ratio of the emulsifier to water is (0.01-5): (150-1000);
(e) a time of the shearing process is 5-15 minutes;
(f) a temperature of the shearing process is less than an ambient temperature;
(g) a temperature is 50-85°C; and
(h) a time is of the polymerization reaction 6-12hours.

**7.** The preparation method of the latex according to claim 5, wherein the method meets one or more of conditions (a) to (d) as follows:

(a) the alkane comprise one or more of $C_5$-$C_{10}$ short chain alkanes;
(b) the monomers comprise one or more of acrylate, methacrylate, hydroxyethyl acrylate, styrene, acrylic acid, butadiene, methacrylic acid, acrylonitrile, methacrylonitrile, acrylamide, and derivatives thereof;
(c) the raw materials of the binding polymer further comprise an initiator, wherein the initiator is selected from an azo initiator and a peroxide initiator; and
(d) the raw materials of the binding polymer further comprise a cross-linking agent, wherein the cross-linking agent comprises one or more of divinylbenzene, ethylene glycol dimethacrylate, allyl methacrylic acid, ethylene glycol diacrylate, butylene glycol diacrylate, butylene glycol dimethacrylate, neopentyl glycol dimethacrylate, adipate dimethacrylate, triethylene glycol dimethacrylate, tetraethylene glycol dimethacrylate, trimethylolpropane, and pentaerythritol tetramethacrylate.

**8.** The preparation method of the latex according to claim 5, wherein the method meets one or two of conditions (a) to (b) as follows:

(a) the emulsifier comprises one or more of sodium lauryl sulfate, cetyltrimethylammonium bromide, nonyl-phenol polyoxyethylene ether, OP surfactant, Span surfactant, Tween surfactant, and sodium dodecylbenzene sulfonate; and
(b) the water phase further comprises one or more of a dispersant, a metal salt, and a polymerization inhibitor; the dispersant comprises one or more of polyvinyl alcohol, magnesium hydroxide, calcium carbonate, calcium phosphate, silica sol, polyvinylpyrrolidone, styrene-maleic anhydride copolymer, and carboxymethyl cellulose; the metal salt is an ionic compound; and the polymerization inhibitor comprises one or more of nitrite and potassium dichromate.

**9.** The preparation method of the latex according to claim 5, wherein the method meets one or two of conditions (a) to (b) as follows:

(a) the oil phase comprises an initiator, the alkane, the monomers, and a cross-linking agent, wherein a mass ratio of the initiator, the alkane, the monomers, and the cross-linking agent is (0.5-3): (20-200): 100: (2-10); and
(b) the water phase comprises a dispersant, the emulsifier, a metal salt, a polymerization inhibitor, and water, wherein a mass ratio of the dispersant, the emulsifier, the metal salt, the polymerization inhibitor, and water is (1-50): (0.01-5): 1: (0.01-2): (150-1000).

**10.** An electrochemical device, wherein a preparation process of an electrode piece of the device adopts the latex according to any one of claims 1 to 4.

FIG. 1

FIG. 2

**EUROPEAN SEARCH REPORT**

Application Number

EP 25 15 1705

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 711 773 B2 (DONGGUAN AMPEREX TECH LTD [CN]) 18 July 2017 (2017-07-18) * claim 1; example 1 * | 1-10 | INV. C08F212/08 H01M4/62 |
| X | CN 107 431 169 A (ZEON CORP) 1 December 2017 (2017-12-01) * claims 1-3 * | 1-10 | |
| X | WO 2008/067444 A1 (DOW GLOBAL TECHNOLOGIES INC [US]; KEEFE MELINDA H [US] ET AL.) 5 June 2008 (2008-06-05) * page 11, line 22 - line 26; claims 1-3 * | 1-9 | |
| X | US 5 157 084 A (LEE DO I [US] ET AL) 20 October 1992 (1992-10-20) * claims 1-3; example 1; table 1 * | 1-9 | |

TECHNICAL FIELDS
SEARCHED (IPC)

C09J
H01M
C08F

The present search report has been drawn up for all claims

| Place of search | Date of completion of the search | Examiner |
|---|---|---|
| Munich | 17 July 2025 | Höfler, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 1705

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2025

| Patent document cited in search report | | Publication date | Patent family member(s) | | Publication date |
|---|---|---|---|---|---|
| US 9711773 | B2 | 18-07-2017 | CN | 103956448 A | 30-07-2014 |
| | | | JP | 6050797 B2 | 21-12-2016 |
| | | | JP | 2015220223 A | 07-12-2015 |
| | | | US | 2015333309 A1 | 19-11-2015 |
| CN 107431169 | A | 01-12-2017 | CN | 107431169 A | 01-12-2017 |
| | | | EP | 3273506 A1 | 24-01-2018 |
| | | | HU | E054762 T2 | 28-09-2021 |
| | | | JP | 6601486 B2 | 06-11-2019 |
| | | | JP | WO2016152026 A1 | 28-12-2017 |
| | | | KR | 20170129125 A | 24-11-2017 |
| | | | PL | 3273506 T3 | 02-11-2021 |
| | | | US | 2018053963 A1 | 22-02-2018 |
| | | | WO | 2016152026 A1 | 29-09-2016 |
| WO 2008067444 | A1 | 05-06-2008 | CA | 2670570 A1 | 05-06-2008 |
| | | | US | 2010317753 A1 | 16-12-2010 |
| | | | US | 2014080959 A1 | 20-03-2014 |
| | | | WO | 2008067444 A1 | 05-06-2008 |
| US 5157084 | A | 20-10-1992 | NONE | | |

EPO FORM P0459

For more details about this annex : see Official Journal of the European Patent Office, No. 12/82